# EUROPÄISCHE PATENTSCHRIFT

(11) **EP 1 369 597 B1**
(45) Veröffentlichungstag und Bekanntmachung des Hinweises auf die Patenterteilung: **06.06.2007**
(21) Anmeldenummer: 03012029.9
(22) Anmeldetag: 28.05.2003
(51) Int. Cl.: F15B 15/28, F15B 15/14

(54) **Hydraulikzylinder**
Hydraulic cylinder
Vérin hydraulique

(30) Priorität: 03.06.2002 DE 20208568 U
(43) Veröffentlichungstag der Anmeldung: 10.12.2003
(73) Patentinhaber: FTE automotive GmbH, 96106 Ebern (DE)
(72) Erfinder: Stobrawe, Herbert, 96250 Ebensfeld (DE); Sperber, Christian, 96184 Rentweinsdorf (DE)
(74) Vertreter: Oppermann, Mark

(56) Entgegenhaltungen:
- EP-A- 1 162 394
- DE-A1- 19 915 832
- DE-U1- 20 116 818
- US-A- 4 889 035

## Beschreibung

Die Erfindung bezieht sich auf einen Hydraulikzylinder gemäß dem Oberbegriff des Patentanspruchs 1. Insbesondere bezieht sich die Erfindung auf einen Geber- oder Nehmerzylinder für eine hydraulische Kupplungsbetätigung für Kraftfahrzeuge, wie sie massenweise in der Automobilindustrie zum Einsatz kommen.

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der beispielsweise über ein Kupplungspedal oder einen elektromotorischen Antrieb betätigt werden kann. Der Geberzylinder ist über eine Druckleitung mit einem Nehmerzylinder hydraulisch verbunden, so daß der durch Niedertreten des Kupplungspedals bzw. elektromotorische Verschiebung des Geberzylinderkolbens im Geberzylinder erzeugte Druck über die Flüssigkeitssäule in der Druckleitung auf den Nehmerzylinder übertragbar ist. Im Ergebnis wird das Ausrücklager der Kupplung über den Nehmerzylinderkolben mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen. Auch sind hydraulische Kupplungsbetätigungen bekannt, bei denen der Ausrückmechanismus der Kupplung von einem damit wirkverbundenen Stell- oder Nehmerzylinder betätigt werden kann, der seinerseits über einen hydraulischen Servokreis angesteuert wird.

Bei derartigen hydraulischen Kupplungsbetätigungen für Kraftfahrzeuge wurde im Stand der Technik bereits vorgeschlagen, mittels geeigneter mechanischer, elektrischer oder magnetischer Einrichtungen die Stellung des Kolbens des Geber- oder Nehmerzylinders zu sensieren (z.B. US 4,705,151, DE 41 20 643 A1, DE 199 15 832 A1, DE 201 16 818 U1), um mittelbar auf die Stellung der Kupplungsdruckplatte zurückzuschließen. Eine solche Sensierung ermöglicht zum einen eine Aussage über den Verschleißzustand der Kupplung. Zum anderen kann der Ein- bzw. Ausrückzustand der Kupplung ermittelt werden, so daß z.B. bei automatisierten Reibungskupplungen die Kupplungsbetätigung im gewünschten Maße automatisch gesteuert werden kann. Die Ergebnisse der Sensierung können schließlich auch für Sicherheitsvorkehrungen im Betrieb des Kraftfahrzeugs verwendet werden, beispielsweise dafür, daß das Kraftfahrzeug nur dann gestartet werden kann, wenn das Kupplungspedal niedergetreten wird.

In diesem Zusammenhang offenbart die gattungsbildende DE 199 15 832 A1 einen Geberzylinder, der einen längsverschieblich in einem Gehäuse angeordneten Kolben aufweist. Am Kolben ist eine Ringnut ausgebildet, die zur Aufnahme eines Ringmagneten dient. Auf dem Gehäuse des Geberzylinders sitzt ein Aufnahmeteil, in dem zwei Hall-Schalter, eine zugehörige Auswerteelektronik sowie ein Anschlußkontaktteil angeordnet sind. Mittels der Hall-Schalter wird durch die Wandung des Zylindergehäuses hindurch die Stellung des Ringmagneten und damit die Stellung des Kolbens erfaßt, worauf das entsprechende Schaltsignal durch die Auswerteelektronik aufbereitet und sodann über das Anschlußkontaktteil zur weiteren Verarbeitung nach außen abgegeben wird. In der DE 199 15 832 A1 wird des weiteren auch in allgemeiner Weise angesprochen, daß, wenn der Kolben nicht magnetisch und zum Beispiel aus Kunststoffmaterial hergestellt ist, der Ringmagnet eingespritzt oder eingeklipst werden kann. Eine konkrete Ausbildung einer solchen Verbindung indes kann diesem Stand der Technik nicht entnommen werden.

Ferner ist ein Nachteil dieses Stands der Technik darin zu sehen, daß bei der hier konkret offenbarten Anordnung des Ringmagneten in einer Ringnut des Kolbens der Ringmagnet nur einen bestimmten Querschnitt und deshalb nur eine bestimmte, eher geringe magnetische Feldstärke aufweisen kann, so daß die korrekte Sensierung des Ringmagneten mittels der Hall-Schalter durch die Wandung des Zylindergehäuses hindurch im Einzelfall Schwierigkeiten bereiten kann.

Auch die DE 201 01 049 U1 offenbart schließlich einen (pneumatischen) Arbeitszylinder, dessen Kolben einen mittels eines Reed-Schalters sensierbaren Ringmagneten trägt.

Der Erfindung liegt ausgehend vom Stand der Technik gemäß der DE 199 15 832 A1 die Aufgabe zugrunde, einen Hydraulikzylinder mit einer Einrichtung zur Erfassung der Kolbenposition zu schaffen, bei dem ein mit dem Stellungsgeber am Zylindergehäuse zusammenwirkendes Signalelement der Erfassungseinrichtung auf einfache und die Nachteile des Stands der Technik vermeidende Weise am Kolben festgelegt werden kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Erfindungsgemäß ist bei einem Hydraulikzylinder, insbesondere einem Geber- oder Nehmerzylinder für eine hydraulische Kupplungsbetätigung für Kraftfahrzeuge, der einen Kolben hat, welcher ein Signalelement aufweist und längsverschieblich in einem Zylindergehäuse aufgenommen ist, an dem ein Stellungsgeber befestigt ist, mittels dessen eine axiale Position des Signalelements und damit des Kolbens im Zylindergehäuse erfaßbar ist, das Signalelement an einer Haltekappe befestigt, die ihrerseits am Kolben angebracht ist.

Dadurch, daß das Signalelement nicht unmittelbar am Kolben angebracht, sondern über eine zusätzliche Haltekappe mit dem Kolben verbunden ist, kann in vorteilhafter Weise eine von der Kolbengeometrie weitgehend unabhängige und damit sehr flexible Gestaltung des Signalelements erfolgen. So ist es möglich, das Signalelement den jeweiligen Erfordernissen entsprechend in seinen Abmessungen und/oder seiner Form derart zu wählen, daß stets ein ausreichender, vom Stellungsgeber jedenfalls erfaßbarer Signalpegel gewährleistet ist. Wenn es sich bei dem Signalelement beispielsweise um einen Permanentmagneten, vorzugsweise einen kostengünstigen ferromagnetischen Ringmagneten handelt, wie im Patentanspruch 14 angegeben, kann so bei gleichem Magnetwerkstoff auf einfache Weise Einfluß auf die magnetischen Eigenschaften (magnetische Feldstärke, magnetische Flußdichte bzw. Entmagnetisierungsfaktor) genommen werden.

Ein weiterer Vorteil der das Signalelement mit dem Kolben verbindenden Haltekappe ist darin zu sehen, daß sie wirtschaftliche Baukastenlösungen ermöglicht. So kann etwa die gleiche Haltekappe an Kolben verschiedener Länge zum Einsatz kommen, um Kolbenbaugruppen zu schaffen, die einen den jeweiligen Erfordernissen entsprechenden Hub gestatten.

Grundsätzlich ist es möglich, die Haltekappe am vom Druckraum des Hydraulikzylinders abgewandten Ende des Kolbens anzubringen. Insbesondere zur Vereinfachung der Montage ist es jedoch bevorzugt, wenn, wie im Patentanspruch 2 angegeben, die Haltekappe an einer druckraumseitigen Stirnfläche des Kolbens angebracht ist. Bei diesem Anbringungsort muß im Falle eines Geberzylinders auch nicht dafür Sorge getragen werden, daß sich ein Druckbolzen zur Betätigung des Kolbens durch die Haltekappe hindurch erstrecken kann.

Nach der Lehre des Patentanspruchs 3 ist die Haltekappe mittels einer Schnappverbindung am Kolben angebracht. Einer Schnappverbindung wird hier gegenüber anderen Verbindungsarten, etwa einer Schraub- oder Klebeverbindung, u.a. deshalb der Vorzug gegeben, weil sie den Zusammenbau insbesondere in der Massenfertigung erleichtert. Entsprechendes gilt für den Patentanspruch 4, gemäß dem das Signalelement mittels einer Schnappverbindung an der Haltekappe befestigt ist. Zweckmäßig hat hierfür die Haltekappe entsprechend dem Patentanspruch 5 einen inneren Nabenabschnitt und einen damit über einen Ringabschnitt verbundenen äußeren Nabenabschnitt, wobei jeder Nabenabschnitt eine Mehrzahl von Schnappsegmenten aufweist, mittels der das Signalelement an der Haltekappe befestigt ist bzw. die Haltekappe am Kolben angebracht ist.

Gemäß dem Patentanspruch 6 weist jedes Schnappsegment endseitig eine nach radial innen oder außen vorspringende Nase auf, die formschlüssig in eine am Kolben vorgesehene Radialnut eingreift bzw. das Signalelement hintergreift, wodurch die Schnappverbindung auf einfache Weise geschaffen wird. Wenn hierbei die formschlüssig in die am Kolben vorgesehene Radialnut eingreifende Nase des jeweiligen Schnappsegments entsprechend dem Patentanspruch 7 auf ihrer vom Kolben abgewandten Seite mit einer Schräge versehen ist, kann ein sonst ggf. vorhandenes, unerwünschtes Axialspiel auf einfache Weise ausgeschlossen werden.

Nach der Lehre des Patentanspruchs 8 weist der Kolben in an sich bekannter Weise (siehe z.B. die DE 37 38 741 A1) ein zentrales Nachsaugventil mit einem Ventilkörper auf, wobei der Ventilkörper mittels der Haltekappe am Kolben gehalten ist. Somit erfüllt die Haltekappe in vorteilhafter Weise zwei Funktionen: Zum einen dient sie der Befestigung des Signalelements am Kolben, zum anderen lagert sie den Ventilkörper des zentralen Nachsaugventils. Hierbei hat der innere Nabenabschnitt der Haltekappe vorzugsweise einen Führungsabschnitt zur Führung des Ventilkörpers, wie im Patentanspruch 9 angegeben, der entsprechend dem Patentanspruch 10 zweckmäßig einen zylindrischen Fortsatz des Ventilkörpers mit geringem Radialspiel konzentrisch umgibt. Gemäß dem Patentanspruch 11 weist der Führungsabschnitt der Haltekappe des weiteren eine Stirnfläche auf, die vorzugsweise einen Anschlag für den Ventilkörper in dessen Nachsaugstellung ausbildet.

Der Patentanspruch 12 sieht vor, daß der Kolben im Zylindergehäuse einen Druckraum variabel begrenzt und eine Lauffläche für ein gehäuseseitiges Dichtelement aufweist, welches in einer Betriebsstellung des Kolbens den Druckraum abdichtet, wobei die Haltekappe mit einer an sich bekannten Nachlaufeinrichtung (vergl. die DE 100 28 673 A1 der Anmelderin) versehen ist, die in einer Grundstellung des Kolbens den Druckraum unter dem Dichtelement hinweg bzw. durch dieses hindurch mit einem Nachlaufbereich verbindet. Auch bei dieser Ausbildungsvariante für sogenannte "Plungerkolben", bei denen das druckraumseitige Dichtelement gehäusefest angeordnet ist, erfüllt die Haltekappe somit in vorteilhafter Weise zwei Funktionen: Einerseits hält sie das Signalelement am Kolben, andererseits stellt sie die benötigte Nachlaufeinrichtung bereit. Hierbei hat der äußere Nabenabschnitt der Haltekappe entsprechend dem Patentanspruch 13 zweckmäßig eine zylindrische Außenumfangsfläche, an der in der Grundstellung des Kolbens das Dichtelement anliegt und die mit mehreren über den Umfang verteilten Ausgleichsnuten versehen ist, welche sich in der Grundstellung des Kolbens in axialer Richtung unter dem Dichtelement hindurch erstrecken.

Schließlich ist es grundsätzlich möglich, die Haltekappe aus einem geeigneten NE-Metall beispielsweise spanend auszubilden. Insbesondere in herstellungstechnischer Hinsicht bevorzugt ist es jedoch, wenn, wie im Patentanspruch 15 angegeben, die Haltekappe aus Kunststoff besteht, vorzugsweise daraus spritzgegossen ist. Somit kann die Haltekappe nämlich in kostengünstiger Weise werkzeugfallend, d.h. ohne die Notwendigkeit aufwendiger Nachbearbeitungsschritte hergestellt werden. Die Verwendung von Kunststoff als Werkstoff für die Haltekappe hat darüber hinaus den Vorteil, daß die Haltekappe keine Abschirmwirkung aufzeigt, die einer korrekten Erfassung der axialen Position des gemäß dem Patentanspruch 14 beispielsweise magnetischen Signalelements durch den beispielsweise induktiv arbeitenden oder mit einem Hall-Sensor versehenen Stellungsgeber abträglich sein könnte. Nicht zuletzt bringt hier die Verwendung von Kunststoff als Haltekappenwerkstoff auch Gewichtsvorteile mit sich.

Die Erfindung wird nachstehend anhand bevorzugter Ausführungsbeispiele unter Bezugnahme auf die beigefügten Zeichnungen näher erläutert. Dabei zeigen:
- Fig. 1: eine Draufsicht auf einen Hydraulikzylinder, an dem ein Stellungsgeber einer Einrichtung zur Erfassung der axialen Kolbenposition montiert ist,
- Fig. 2: eine Schnittansicht des Hydraulikzylinders gemäß Fig. 1 entsprechend der Schnittverlaufslinie II-II in Fig. 1, wobei der Stellungsgeber zur Vereinfachung der Darstellung vom Hydraulikzylinder abgenommen ist,
- Fig. 3: eine gegenüber der Darstellung in den Fig. 1 und 2 im Maßstab vergrößerte, abgebrochene Schnittansicht des in Fig. 2 linken Endes des aus dem Hydraulikzylinder gemäß Fig. 1 herausgezogenen Kolbens, an dem eine Haltekappe zur Lagerung des mit dem Stellungsgeber zusammenwirkenden Signalelements angebracht ist,
- Fig. 4: eine perspektivische Darstellung des aus dem Hydraulikzylinder gemäß Fig. 1 herausgezogenen Kolbens,
- Fig. 5: eine gegenüber der Darstellung in Fig. 3 im Maßstab vergrößerte Draufsicht auf die am Kolben gemäß den Fig. 2 bis 4 angebrachte Haltekappe zur Befestigung des mit dem Stellungsgeber zusammenwirkenden Signalelements,
- Fig. 6: eine Seitenansicht der Haltekappe gemäß Fig. 5 von rechts in Fig. 5,
- Fig. 7: eine Schnittansicht der Haltekappe gemäß Fig. 5 entsprechend der Schnittverlaufslinie VII-VII in Fig. 6,
- Fig. 8: eine vergrößerte Darstellung des Details VIII von Fig. 7,
- Fig. 9: eine vergrößerte Darstellung des Details IX von Fig. 7,
- Fig. 10: eine Draufsicht auf eine Haltekappe zur Lagerung eines mit einem Stellungsgeber am Zylindergehäuse zusammenwirkenden Signalelements in einer alternativen Ausgestaltung, die mit einer Nachlaufeinrichtung versehen an einem Plungerkolben anbringbar ist,
- Fig. 11: eine Seitenansicht der Haltekappe gemäß Fig. 10 von links in Fig. 10,
- Fig. 12: eine Seitenansicht der Haltekappe gemäß Fig. 10 von rechts in Fig. 10,
- Fig. 13: eine Schnittansicht der Haltekappe gemäß Fig. 10 entsprechend der Schnittverlaufslinie XIII-XIII in Fig. 10 und
- Fig. 14: eine Schnittansicht der Haltekappe gemäß Fig. 10 entsprechend der Schnittverlaufslinie XIV-XIV in Fig. 12.

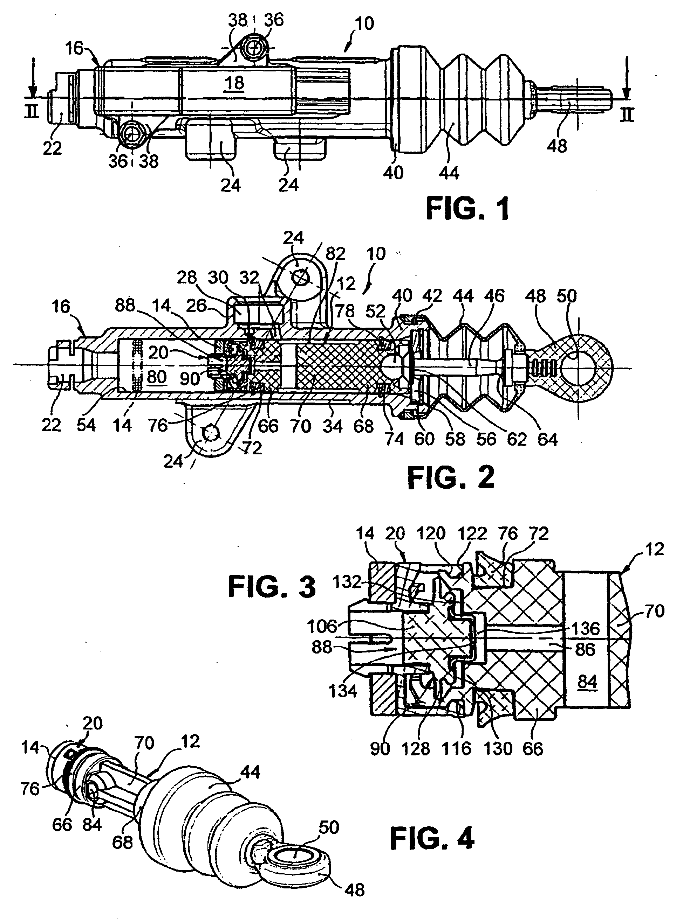

Die Fig. 1 und 2 zeigen einen Hydraulikzylinder 10, im dargestellten Ausführungsbeispiel einen Geberzylinder für eine hydraulische Kupplungsbetätigung für Kraftfahrzeuge, der einen in seiner Grundstellung dargestellten Kolben 12 hat, welcher ein Signalelement in Form eines ferromagnetischen Ringmagneten 14 aufweist und längsverschieblich in einem Zylindergehäuse 16 aufgenommen ist, an dem ein Stellungsgeber 18 befestigt ist. Mittels des Stellungsgebers 18 kann die axiale Position des Ringmagneten 14 und damit des Kolbens 12 im Zylindergehäuse 16 in an sich bekannter Weise erfaßt werden. Wesentlich ist, daß, wie nachfolgend noch näher beschrieben werden wird, das Signalelement bzw. der Ringmagnet 14 an einer Haltekappe 20 bzw. 20' befestigt ist, die ihrerseits am Kolben 12 angebracht ist.

Wie insbesondere der Fig. 2 zu entnehmen ist, weist das im dargestellten Ausführungsbeispiel aus einem NE-Metall gefertigte Zylindergehäuse 16 an seinem im Fig. 2 linken Ende einen Druckanschluß 22 auf, über den der Hydraulikzylinder 10 mit einem Nehmerzylinder (nicht dargestellt) verbunden werden kann. Das Zylindergehäuse 16 ist ferner im wesentlichen mittig mit zwei auf gegenüberliegenden Seiten ausgebildeten Befestigungsflanschen 24 zur Montage an etwa einem Pedalbock (nicht gezeigt) sowie einem in Fig. 2 oben dargestellten Nachlaufanschluß 26 versehen, über den der Hydraulikzylinder 10 an einen Nachlaufbehälter (nicht dargestellt) angeschlossen werden kann. Der Nachlaufanschluß 26 hat einen Nachlaufkanal 28, der in einer Druckausgleichsbohrung 30 sowie einer Nachlaufbohrung 32 mündet. An der in Fig. 2 unteren Seite weist das Zylindergehäuse 16 eine Auflagefläche 34 für den Stellungsgeber 18 auf, an welcher der Stellungsgeber 18 im in Fig. 1 gezeigten montierten Zustand flächig anliegt. Die Befestigung des ggf. bereits eine Auswerteelektronik umfassenden Stellungsgebers 18 an dem Zylindergehäuse 16 erfolgt in dem in Fig. 1 dargestellten Ausführungsbeispiel mittels Schrauben 36, die in zugeordnete Gewindebohrungen (nicht gezeigt) des Zylindergehäuses 16 eingeschraubt sind und dabei Befestigungsflansche 38 des Stellungsgebers 18 durch- bzw. hintergreifen. Als Alternative zu dieser Befestigung könnte der Stellungsgeber 18 auch mittels einer Schnappverbindung mit dem Zylindergehäuse 16 verrastet sein, wie sie in der DE 201 16 818 U1 der Anmelderin näher beschrieben wird, auf die diesbezüglich hiermit ausdrücklich Bezug genommen wird.

An dem in den Fig. 1 und 2 rechten Ende hat das Zylindergehäuse 16 einen Flanschabschnitt 40 mit einer außenumfangsseitig eingebrachten Radialnut 42, die der Befestigung einer hier zur Vereinfachung der Darstellung im unverformten Zustand gezeigten elastomeren Schutzkappe 44 dient. Das in Fig. 2 rechte Ende der faltenbalgartig ausgebildeten Schutzkappe 44 ist an einem Druckbolzen 46 festgelegt, der auf der in Fig. 2 rechten Seite fest mit einem Druckbolzenkopf 48 verbunden ist, welcher ein Anschlußauge 50 zum Anschluß an ein Kupplungspedal (nicht dargestellt) aufweist. Das in Fig. 2 linke Ende des Druckbolzens 46 ist mit einem Kugelkopf 52 versehen, über den der Druckbolzen 46 schwenkbar aber zug- und druckfest mit dem hier aus Kunststoff bestehenden Kolben 12 verbunden ist.

Der in einer zylindrischen Sackbohrung 54 des Zylindergehäuses 16 längsverschieblich aufgenommene Kolben 12 ist mittels einer geschlitzten Anschlagscheibe 56 in dem Zylindergehäuse 16 gesichert, die ihrerseits mittels eines Sicherungsrings 58 an einem Absatz 60 des Zylindergehäuses 16 befestigt ist. Die Anschlagscheibe 56 wirkt mit einem an dem Druckbolzen 46 vorgesehenen Zuganschlag 62 sowie einem hier ebenfalls am Druckbolzen 46 angebrachten Druckanschlag 64 zusammen, um den Hub des Kolbens 12 im Zylindergehäuse 16 zu begrenzen.

Der Kolben 12 hat im dargestellten Ausführungsbeispiel zwei im wesentlichen zylindrische Abschnitte 66, 68, die über einen im Querschnitt im wesentlichen kreuzförmigen Verbindungsabschnitt 70 miteinander verbunden sind. Jeder der zylindrischen Abschnitte 66, 68 ist außenumfangsseitig mit einer Radialnut 72, 74 versehen, von denen die in Fig. 2 linke Radialnut 72 der Aufnahme eines Primärdichtelements 76 in der Form eines elastomeren Nutrings dient, während in der in Fig. 2 rechten Radialnut 74 ein Sekundärdichtelement 78 - ebenfalls in der Form eines elastomeren Nutrings - aufgenommen ist. In den Fig. 2 bis 4 sind die Dichtelemente 76 bzw. 78 zur Vereinfachung der Darstellung im unverformten Zustand gezeigt. Das Primärdichtelement 76 begrenzt in an sich bekannter Weise einen mit dem Druckanschluß 22 kommunizierenden Druckraum 80 im Zylindergehäuse 16, während ein zwischen dem Außenumfang des Kolbens 12 und der Wandung der Sackbohrung 54 vorgesehener Nachlaufraum 82 in an sich bekannter Weise von dem Primärdichtelement 76 in Fig. 2 nach links und dem Sekundärdichtelement 78 in Fig. 2 nach rechts begrenzt wird.

Der Verbindungsabschnitt 70 des Kolbens 12 ist schließlich angrenzend an den zylindrischen Abschnitt 66 mit einer Querbohrung 84 versehen, in der eine sich durch den zylindrischen Abschnitt 66 hindurch erstreckende Längsbohrung 86 mündet. Auf der in den Fig. 2 und 3 linken Seite der Längsbohrung 86 schließt sich ein an sich bekanntes zentrales Nachsaugventil 88 an, dessen elastomerer Ventilkörper 90 mittels der an der druckraumseitigen Stirnfläche des Kolbens 12 angebrachten Haltekappe 20 in axialer Richtung bewegbar am Kolben 12 gehalten ist, wie noch näher beschrieben werden wird.

In dem in der hydraulischen Kupplungsbetätigung montierten, befüllten Zustand des Geberzylinders 10 kommuniziert der Druckraum 80 in der in Fig. 2 dargestellten Grundstellung des Kolbens 12 über die Druckausgleichsbohrung 30 und den Nachlaufkanal 28 mit dem Nachlaufbehälter (nicht dargestellt) sowie über das Nachsaugventil 88, die Längsbohrung 86 und die Querbohrung 84 mit dem Nachlaufraum 82. Der Nachlaufraum 82 selbst ist über die Nachlaufbohrung 32 und den Nachlaufkanal 28 mit dem Nachlaufbehälter verbunden. Wird nun der Kolben 12 über das an dem Druckbolzenkopf 48 angelenkte Kupplungspedal (nicht gezeigt) in das Zylindergehäuse 16 hinein, d.h. in Fig. 2 nach links verschoben, so überfährt das Primärdichtelement 76 die Druckausgleichsbohrung 30 und unterbricht somit die hydraulische Verbindung zwischen dem Druckraum 80 und dem Nachlaufbehälter. Durch den sich im Druckraum 80 aufbauenden Druck wird der Ventilkörper 90 des Nachsaugventils 88 gegen den Kolben 12 gedrückt und verhindert somit ein Abströmen der Hydraulikflüssigkeit über die Längsbohrung 86 und die Querbohrung 84 in den Nachlaufraum 82, der nun über die Nachlaufbohrung 32 und die Druckausgleichsbohrung 30 mit dem Nachlaufbehälter verbunden ist. Der sich im Druckraum 80 einstellende Druck wird über den Druckanschluß 22 und die Flüssigkeitssäule zwischen dem Geberzylinder 10 und dem am Druckanschluß 22 angeschlossenen Nehmerzylinder (nicht dargestellt) übertragen, um an der mit dem Nehmerzylinder wirkverbundenen Trockenreibkupplung (nicht gezeigt) eine Ausrückkraft aufzubringen. Die axiale Bewegung des Kolbens 12 ist hierbei durch Sensierung des über die Haltekappe 20 am Kolben 12 befestigten Ringmagneten 14 mittels des am Zylindergehäuse 16 fest angebrachten Stellungsgebers 18 durch die Wandung des Zylindergehäuses 16 hindurch erfaßbar. Der maximale Hub, d.h. die am weitesten in das Zylindergehäuse 16 hinein verschobene Position des Kolbens 12 ist in Fig. 2 durch den strichpunktiert eingezeichneten Ringmagneten 14 angedeutet.

Wird die Kupplung gelöst, so wird durch die Rückstellkraft der Kupplung die Flüssigkeitssäule in den Geberzylinder 10 zurückverschoben. Eilt, wie es z.B. durch eine Rückholfeder (nicht dargestellt) am Kupplungspedal verursacht werden kann, der dann über den Druckbolzen 46 gezogene Kolben 12 des Geberzylinders 10 dieser Rückströmbewegung vor, entsteht im Druckraum 80 des Geberzylinders 10 und im Leitungssystem zum Nehmerzylinder ein Unterdruck. Infolge der Druckdifferenz, die dann zwischen den beiden Seiten des Ventilkörpers 90 des Nachsaugventils 88 herrscht, hebt der axial verschiebbare Ventilkörper 90 vom Kolben 12 ab und öffnet die Längsbohrung 86 im Kolben 12. In den Druckraum 80 strömt sodann Hydraulikflüssigkeit vom Nachlaufraum 82 über die Querbohrung 84 und die Längsbohrung 86 im Kolben 12. Sobald die Druckdifferenz zwischen den beiden Seiten des Ventilkörpers 90 ausgeglichen ist, strömt die überflüssige Menge der so eingeströmten Hydraulikflüssigkeit durch die inzwischen wieder offene, d.h. vom Primärdichtelement 76 in Fig. 2 nach rechts überfahrene Druckausgleichsbohrung 30 in den Ausgleichsbehälter zurück.

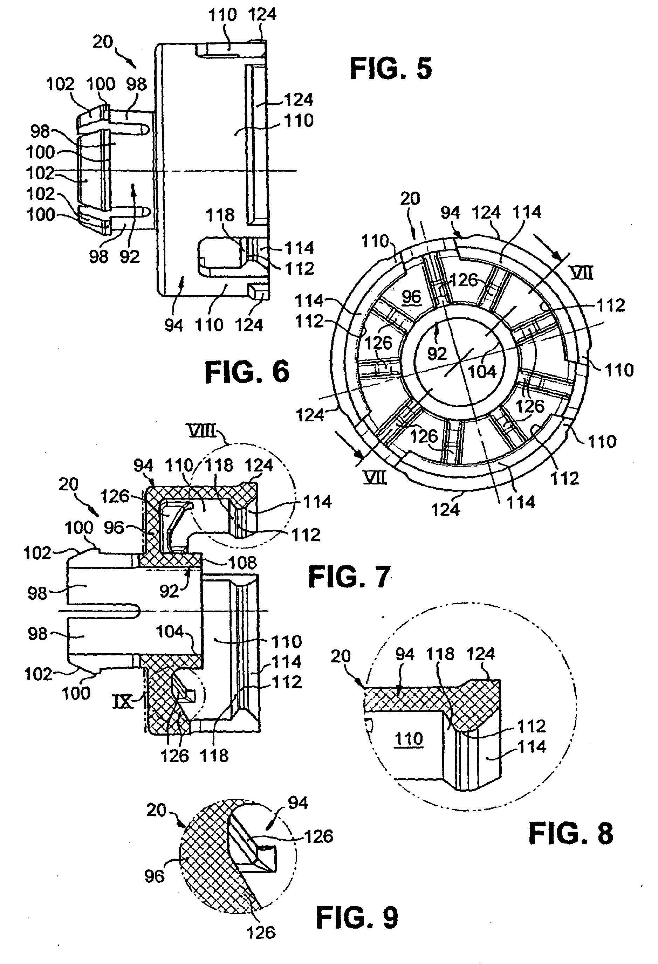

Den Fig. 3 und 5 bis 9 sind Einzelheiten der mittels einer Schnappverbindung am Kolben 12 angebrachten, vorzugsweise aus Kunststoff spritzgegossenen Haltekappe 20 zu entnehmen, an der im dargestellten Ausführungsbeispiel der Ringmagnet 14 ebenfalls mittels einer Schnappverbindung angebracht ist. Gemäß insbesondere der Fig. 7 hat die Haltekappe 20 einen inneren, im wesentlichen hohlzylindrischen Nabenabschnitt 92 und einen äußeren, im wesentlichen hohlzylindrischen Nabenabschnitt 94, wobei der innere Nabenabschnitt 92 mit dem äußeren Nabenabschnitt 94 durch einen Ringabschnitt 96 verbunden ist.

Wie den Fig. 3 und 7 zu entnehmen ist, steht der innere Nabenabschnitt 92 in beide Richtungen, d.h. in den Fig. 3 und 7 nach links und nach rechts über den Ringabschnitt 96 über. Der in den Fig. 3, 5 und 7 nach links über den Ringabschnitt 96 überstehende Bereich des inneren Nabenabschnitts 92 ist zur Ausbildung von im dargestellten Ausführungsbeispiel vier Schnappsegmenten 98 ausgehend vom freien Ende in gleichmäßigen Winkelabständen geschlitzt. Die Schnappsegmente 98 dienen der Befestigung des Ringmagneten 14 an der Haltekappe 20, wie die Fig. 3 zeigt. Hierfür weist jedes Schnappsegment 98 an seinem freien, d.h. vom Ringabschnitt 96 abgewandten Ende außenumfangsseitig eine nach radial außen vorspringende Nase 100 auf, die auf ihrer vom Ringabschnitt 96 abgewandten Seite mit einer Fügeschräge 102 für den Ringmagneten 14 versehen ist. Im an der Haltekappe 20 montierten Zustand des Ringmagneten 14, in dem der Ringmagnet 14 gemäß Fig. 3 flächig an dem Ringabschnitt 96 der Haltekappe 20 anliegt, hintergreifen die Nasen 100 der Schnappsegmente 98 den Ringmagneten 14 und halten diesen somit formschlüssig und im wesentlichen spielfrei an der Haltekappe 20.

Der in den Fig. 3 und 7 nach rechts über den Ringabschnitt 96 der Haltekappe 20 überstehende Bereich des inneren Nabenabschnitts 92 bildet einen hohlzylindrischen Führungsabschnitt 104 zur axialen Führung des Ventilkörpers 90 aus, der gemäß Fig. 3 einen zylindrischen Fortsatz 106 des Ventilkörpers 90 mit geringem Radialspiel konzentrisch umgibt, so daß der Ventilkörper 90 eine Bewegung in axialer Richtung ausführen kann. Der Führungsabschnitt 104 der Haltekappe 20 hat an seinem freien, d.h. vom Ringabschnitt 96 abgewandten Ende eine kreisringförmige Stirnfläche 108, die einen Anschlag für den Ventilkörper 90 in dessen in Fig. 3 gezeigten Nachsaugstellung ausbildet.

Der äußere Nabenabschnitt 94 der Haltekappe 20 erstreckt sich ausgehend vom Ringabschnitt 96 ausschließlich in einer Richtung, d.h. nach links in den Fig. 3, 5 und 7. Auch der äußere Nabenabschnitt 94 ist zur Ausbildung von im dargestellten Ausführungsbeispiel drei Schnappsegmenten 110 ausgehend von seinem freien Ende, d.h. von rechts in den Fig. 3, 5 und 7 in gleichmäßigen Winkelabständen geschlitzt. Die Schnappsegmente 110 dienen der Befestigung der Haltekappe 20 an dem Kolben 12, wie in Fig. 3 dargestellt ist. Hierfür weist jedes Schnappsegment 110 an seinem freien, d.h. vom Ringabschnitt 96 abgewandten Ende innenumfangsseitig eine nach radial innen vorspringende Nase 112 auf. Jede der Nasen 112 ist, wie insbesondere die Fig. 8 zeigt, auf ihrer vom Ringabschnitt 96 abgewandten Seite mit einer Fügeschräge 114 versehen, die die Montage der Haltekappe 20 am Kolben 12 erleichtert. Im am Kolben 12 montierten Zustand der Haltekappe 20 greifen die Nasen 112 der Schnappsegmente 110 gemäß Fig. 3 in eine am druckraumseitigen Ende des zylindrischen Abschnitts 66 des Kolbens 12 außenumfangsseitig eingebrachte Radialnut 116 ein, um die Haltekappe 20 formschlüssig am Kolben 12 zu befestigen. Ferner hat die formschlüssig in die am Kolben 12 vorgesehene Radialnut 116 eingreifende Nase 112 des jeweiligen Schnappsegments 110 auf ihrer vom Kolben 12 abgewandten bzw. dem Ringabschnitt 96 zugewandten Seite eine Schräge 118, die mit einer komplementär ausgebildeten Schräge 120 an der Radialnut 116 des Kolbens 12 zusammenwirkt, um die Haltekappe 20 spielfrei am Kolben 12 festzulegen. Genauer gesagt wird die Haltekappe 20 unter der Federwirkung der Schnappsegmente 110 über die Schrägen 118 und 120 gegen die in Fig. 3 rechte, bezüglich der Mittelachse des Kolbens 12 senkrecht stehende Flanke 122 der Radialnut 116 des Kolbens 12 gezogen. Im Ergebnis wird auf einfache Weise eine definierte Lage des Ringmagneten 14 bezüglich des Kolbens 12 erzielt. Es bedarf keiner näheren Erläuterung, daß klar definierte Lagebeziehungen zwischen dem Kolben 12 und dem Ringmagneten 14 einerseits und dem Zylindergehäuse 16 und dem Stellungsgeber 18 andererseits Voraussetzung dafür sind, daß mittels des Stellungsgebers 18 Werte erfaßt werden können, die für den tatsächlichen Ein- oder Ausrückweg bzw. Verschleißzustand der Kupplung repräsentativ sind.

Am freien, d.h. in den Fig. 5 und 7 rechten Ende der Schnappsegmente 110 der Haltekappe 20 sind die Schnappsegmente 110 des weiteren außenumfangsseitig jeweils mit einem bogenförmigen Vorsprung 124 versehen, der vom äußeren Nabenabschnitt 94 in radialer Richtung um einen vorbestimmten Betrag vorsteht, wie insbesondere die Fig. 8 zeigt. Durch die Vorsprünge 124 wird die Haltekappe 20 und damit der Kolben 12 im im Zylindergehäuse 16 montierten Zustand des Kolbens 12 bezüglich der Sackbohrung 54 im Zylindergehäuse 16 zentriert, so daß der im Außendurchmesser dem äußeren Nabenabschnitt 94 der Haltekappe 20 im wesentlichen entsprechende Ringmagnet 14 nicht an der Wandung der Sackbohrung 54 zur Anlage gelangen kann. Außerdem sorgen die Vorsprünge 124 für einen definierten Ringspalt zwischen der Wandung der Sackbohrung 54 und dem Außenumfang des äußeren Nabenabschnitts 94 der Haltekappe 20. Durch diesen Ringspalt kann Hydraulikflüssigkeit vom Druckraum 80 zum Nachsaugventil 88 und umgekehrt über die Schlitze zwischen den Schnappsegmenten 110 des äußeren Nabenabschnitts 94 der Haltekappe 20 gelangen.

Die einstückig ausgebildete Haltekappe 20 ist im übrigen, wie insbesondere die Fig. 6, 7 und 9 zeigen, mittels einer Mehrzahl von, im dargestellten Ausführungsbeispiel neun Rippen 126 ausgesteift, die sich gleichmäßig über den Umfang verteilt zwischen dem Außenumfang des inneren Nabenabschnitts 92 und dem Innenumfang des äußeren Nabenabschnitts 94 entlang der dem Kolben 12 zugewandten Seite des Ringabschnitts 96 erstrecken. Die Rippen 126 verhindern eine unerwünschte Verformung der Haltekappe 20, die einer definierten Lagebeziehung zwischen dem Ringmagneten 14 und dem Kolben 12 abträglich wäre.

Zum an sich bekannten Nachsaugventil 88 sei schließlich unter Bezugnahme auf die Fig. 3 an dieser Stelle noch soviel erwähnt, daß der Ventilkörper 90 mit einer Niederdruck- und einer Hochdruckabdichtung 128 bzw. 130 versehen mit einem kolbenseitig ausgebildeten Dichtsitz 132 zusammenwirkt, wobei der Ventilkörper 90 kolbenseitig mittels eines metallischen Stütznapfs 134 armiert ist, der den Ventilkörper 90 auch kolbenseitig in einem im Durchmesser vergrößerten Bohrungsabschnitt 136 der Längsbohrung 86 in axialer Richtung führt.

Obgleich in dem obigen Ausführungsbeispiel der Einsatz der Haltekappe 20 exemplarisch an einem "klassischen" Kolben 12 beschrieben wurde, der zwei mit einer gehäuseseitigen Lauffläche zusammenwirkende Dichtelemente 76, 78 aufweist, ist für den Fachmann ersichtlich, daß die Haltekappe 20 auch an einem sogenannten "Schaftkolben" eingesetzt werden könnte, bei dem ein gehäusefestes (Sekundär)Dichtelement mit einer am Kolbenschaft vorgesehenen Lauffläche zusammenwirkt, während ein am Kolbenkopf angebrachtes (Primär)Dichtelement mit einer gehäuseseitigen Lauffläche zusammenwirkt.

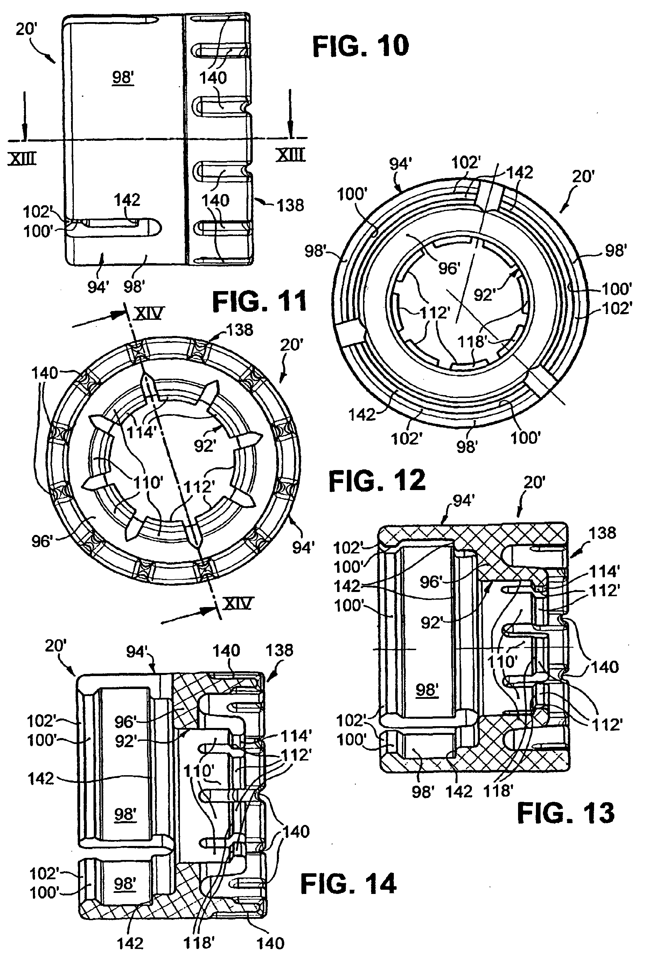

Die Fig. 10 bis 14 zeigen eine Haltekappe 20', die an einem sogenannten "Plungerkolben" zum Einsatz kommen kann, bei dem zwei oder mehr gehäusefeste Dichtelemente (nicht dargestellt) mit einer kolbenseitig vorgesehenen Lauffläche (nicht dargestellt) zusammenwirken. Den Teilen bzw. Abschnitten gemäß den Fig. 5 bis 9 entsprechende Teile bzw. Abschnitte der Haltekappe sind mit den gleichen Bezugszeichen versehen, die um einen Strich (') ergänzt wurden, und werden nachfolgend nur noch insoweit beschrieben, als sie sich vom vorhergehenden Ausführungsbeispiel unterscheiden bzw. es für das Verständnis des zweiten Ausführungsbeispiels erforderlich erscheint. Bei diesem Ausführungsbeispiel wurde außerdem der Einfachheit halber auf eine vollständige Darstellung des Hydraulikzylinders mit Zylindergehäuse und Kolben verzichtet, da dieser prinzipiell wie in der DE 100 28 673 A1 der Anmelderin ausführlich beschrieben ausgebildet sein kann, auf die diesbezüglich hiermit ausdrücklich Bezug genommen wird. Erwähnt sei in diesem Zusammenhang lediglich noch, daß an dem Zylindergehäuse gemäß der DE 100 28 673 A1 zusätzlich eine Aufnahme für den Stellungsgeber 18 vorgesehen sein muß, die wie beispielsweise in der DE 201 16 818 U1 der Anmelderin offenbart ausgebildet sein kann, auf welche diesbezüglich hiermit ebenfalls ausdrücklich Bezug genommen wird.

Bei dem Ausführungsbeispiel gemäß den Fig. 10 bis 14 dient die das Signalelement am Kolben festlegende Haltekappe 20' nicht zugleich als Halterung für ein zentrales Nachsaugventil, wie anhand des vorherigen Ausführungsbeispiels beschrieben. Statt dessen ist die Haltekappe 20' mit einer Nachlaufeinrichtung 138 versehen, die eine Mehrzahl von über den Umfang des äußeren Nabenabschnitts 94' verteilten Ausgleichsnuten 140 aufweist, welche sich wenigstens an der zylindrischen Außenumfangsfläche am kolbenseitigen Ende des äußeren Nabenabschnitts 94' in axialer Richtung erstrecken. Die Ausgleichsnuten 140 sorgen in einer Grundstellung des Kolbens unter dem gehäuseseitigen Primärdichtelement hinweg bzw. durch dieses hindurch für eine Verbindung zwischen einem Druckraum und einem Nachlaufbereich des Geberzylinders. In einer Betriebsstellung des Kolbens dichtet das mit der kolbenseitigen Lauffläche zusammenwirkende Primärdichtelement den vom Kolben im Zylindergehäuse variabel begrenzten Druckraum gegenüber dem Nachlaufbereich ab. Die Nachlaufeinrichtung 138 soll an dieser Stelle nicht näher beschrieben werden, da sie hinsichtlich Aufbau und Funktion im wesentlichen der in der DE 100 28 673 A1 der Anmelderin ausführlich beschriebenen Nachlaufeinrichtung entspricht, auf die diesbezüglich hiermit ausdrücklich verwiesen wird.

Bei diesem Ausführungsbeispiel ist die Haltekappe 20' mittels des inneren Nabenabschnitts 92' an einem im Außendurchmesser gegenüber der Kolbenlauffläche verjüngten Befestigungsabsatz (nicht dargestellt) des Kolbens befestigt, wozu der innere Nabenabschnitt 92' ausgehend von seinem dem Kolben zugewandten Ende zur Ausbildung von mehreren, im dargestellten Ausführungsbeispiel acht gleichmäßig am Umfang verteilten Schnappsegmenten 110' geschlitzt ist. Wie bei dem vorhergehenden Ausführungsbeispiel weisen die Schnappsegmente 110' jeweils eine nach radial innen vorspringende Nase 112' mit einer kolbenseitigen Fügeschräge 114' und einer vom Kolben abgewandten Schräge 118' auf. Die Nasen 112' wirken mit ihren Schrägen 114', 118' entsprechend dem vorhergehenden Ausführungsbeispiel mit einer am Befestigungsabsatz des Kolbens ausgebildeten Radialnut (nicht gezeigt) zusammen, um die Haltekappe 20' formschlüssig und im wesentlichen spielfrei am Kolben festzulegen.

Im Gegensatz zu dem unter Bezugnahme auf die Fig. 1 bis 9 beschriebenen Ausführungsbeispiel wird das Signalelement bei dem zweiten Ausführungsbeispiel mittels des äußeren Nabenabschnitts 94' der Haltekappe 20' gehalten. Hierzu steht der äußere Nabenabschnitt 94' anstelle des inneren Nabenabschnitts über den Ringabschnitt 96' auf der vom Kolben abgewandten Seite des Ringabschnitts 96' vor und ist dort ausgehend von der vom Kolben abgewandten Stirnseite des äußeren Nabenabschnitts 94' mehrfach, im dargestellten Ausführungsbeispiel dreifach geschlitzt, um drei Schnappsegmente 98' auszubilden. Jedes Schnappsegment 98' weist an seinem freien, d.h. vom Ringabschnitt 96' abgewandten Ende innenumfangsseitig eine radial nach innen vorspringende Nase 100' mit einer Fügeschräge 102' für das Signalelement auf. Die Nasen 100' hintergreifen das Signalelement in dessen an der Haltekappe 20' montierten Zustand und halten das Signalelement im wesentlichen spielfrei gegen Absätze 142, die innenumfangsseitig an den Schnappsegmenten 98' ausgebildet sind.

Es wird ein Hydraulikzylinder, insbesondere ein Geber- oder Nehmerzylinder für eine hydraulische Kupplungsbetätigung für Kraftfahrzeuge offenbart, welcher einen Kolben aufweist, dem ein Signalelement zugeordnet und der längsverschieblich in einem Zylindergehäuse aufgenommen ist, an dem ein Stellungsgeber befestigt ist, mittels dessen eine axiale Position des Signalelements und damit des Kolbens im Zylindergehäuse erfaßbar ist. Erfindungsgemäß ist das Signalelement mittels einer Haltekappe am Kolben angebracht. Im Ergebnis wird ein Hydraulikzylinder mit einer Einrichtung zur Erfassung der Kolbenposition geschaffen, bei dem das mit dem Stellungsgeber am Zylindergehäuse zusammenwirkende Signalelement der Erfassungseinrichtung auf einfache Weise am Kolben festgelegt werden kann, die zudem eine weitgehend von der Kolbengeometrie unabhängige Dimensionierung des Signalelements gestattet. In besonders bevorzugten Ausführungsbeispielen ist die Haltekappe für das Signalelement zugleich Funktionsträger für weitere Funktionsabschnitte des Kolbens, etwa für ein zentrales Nachsaugventil an einem klassischen Kolben oder einem Schaftkolben oder für eine Nachlaufeinrichtung an einem Plungerkolben.

### Bezugszeichenliste

- 10: Hydraulikzylinder
- 12: Kolben
- 14: Ringmagnet
- 16: Zylindergehäuse
- 18: Stellungsgeber
- 20, 20': Haltekappe
- 22: Druckanschluß
- 24: Befestigungsflansch
- 26: Nachlaufanschluß
- 28: Nachlaufkanal
- 30: Druckausgleichsbohrung
- 32: Nachlaufbohrung
- 34: Auflagefläche
- 36: Schraube
- 38: Befestigungsflansch
- 40: Flanschabschnitt
- 42: Radialnut
- 44: Schutzkappe
- 46: Druckbolzen
- 48: Druckbolzenkopf
- 50: Anschlußauge
- 52: Kugelkopf
- 54: Sackbohrung
- 56: Anschlagscheibe
- 58: Sicherungsring
- 60: Absatz
- 62: Zuganschlag
- 64: Druckanschlag
- 66: zylindrischer Abschnitt
- 68: zylindrischer Abschnitt
- 70: Verbindungsabschnitt
- 72: Radialnut
- 74: Radialnut
- 76: Primärdichtelement
- 78: Sekundärdichtelement
- 80: Druckraum
- 82: Nachlaufraum
- 84: Querbohrung
- 86: Längsbohrung
- 88: Nachsaugventil
- 90: Ventilkörper
- 92, 92': innerer Nabenabschnitt
- 94, 94': äußerer Nabenabschnitt
- 96, 96': Ringabschnitt
- 98, 98': Schnappsegment
- 100, 100': Nase
- 102, 102': Fügeschräge
- 104: Führungsabschnitt
- 106: zylindrischer Fortsatz
- 108: Stirnfläche
- 110, 110': Schnappsegment
- 112, 112': Nase
- 114, 114': Fügeschräge
- 116: Radialnut
- 118, 118': Schräge
- 120: Schräge
- 122: Flanke
- 124: Vorsprung
- 126: Rippe
- 128: Niederdruckabdichtung
- 130: Hochdruckabdichtung
- 132: Dichtsitz
- 134: Stütznapf
- 136: Bohrungsabschnitt
- 138: Nachlaufeinrichtung
- 140: Ausgleichsnut
- 142: Absatz

## Patentansprüche

1. Hydraulikzylinder (10), insbesondere Geber- oder Nehmerzylinder für eine hydraulische Kupplungsbetätigung für Kraftfahrzeuge, mit einem Kolben (12), der ein Signalelement (14) aufweist und längsverschieblich in einem Zylindergehäuse (16) aufgenommen ist, an dem ein Stellungsgeber (18) befestigt ist, mittels dessen eine axiale Position des Signalelements (14) und damit des Kolbens (12) im Zylindergehäuse (16) erfaßbar ist, **dadurch gekennzeichnet, daß** das Signalelement (14) an einer Haltekappe (20, 20') befestigt ist, die ihrerseits am Kolben (12) angebracht ist.

2. Hydraulikzylinder (10) nach Anspruch 1, **dadurch gekennzeichnet, daß** die Haltekappe (20, 20') an einer druckraumseitigen Stirnfläche des Kolbens (12) angebracht ist.

3. Hydraulikzylinder (10) nach Anspruch 1 oder 2, **dadurch gekennzeichnet, daß** die Haltekappe (20, 20') mittels einer Schnappverbindung am Kolben (12) angebracht ist.

4. Hydraulikzylinder (10) nach einem der vorhergehenden Ansprüche, **dadurch gekennzeichnet, daß** das Signalelement (14) mittels einer Schnappverbindung an der Haltekappe (20, 20') befestigt ist.

5. Hydraulikzylinder (10) nach Anspruch 3 oder 4, **dadurch gekennzeichnet, daß** die Haltekappe (20, 20') einen inneren Nabenabschnitt (92, 92') und einen damit über einen Ringabschnitt (96, 96') verbundenen äußeren Nabenabschnitt (94, 94') hat, wobei jeder Nabenabschnitt (92, 92', 94, 94') eine Mehrzahl von Schnappsegmenten (98, 98', 110, 110') aufweist, mittels der das Signalelement (14) an der Haltekappe (20, 20') befestigt ist bzw. die Haltekappe (20, 20') am Kolben (12) angebracht ist.

6. Hydraulikzylinder (10) nach Anspruch 5, **dadurch gekennzeichnet, daß** jedes Schnappsegment (98, 98', 110, 110') endseitig eine nach radial innen oder außen vorspringende Nase (100, 100', 112, 112') aufweist, die formschlüssig in eine am Kolben (12) vorgesehene Radialnut (116) eingreift bzw. das Signalelement (14) hintergreift.

7. Hydraulikzylinder (10) nach Anspruch 6, **dadurch gekennzeichnet, daß** die formschlüssig in die am Kolben (12) vorgesehene Radialnut (116) eingreifende Nase (112, 112') des jeweiligen Schnappsegments (110, 110') auf ihrer vom Kolben (12) abgewandten Seite mit einer Schräge (118, 118') versehen ist.

8. Hydraulikzylinder (10) nach einem der vorhergehenden Ansprüche, **dadurch gekennzeichnet, daß** der Kolben (12) ein zentrales Nachsaugventil (88) mit einem Ventilkörper (90) aufweist, wobei der Ventilkörper (90) mittels der Haltekappe (20) am Kolben (12) gehalten ist.

9. Hydraulikzylinder (10) nach Anspruch 8, **dadurch gekennzeichnet, daß** der innere Nabenabschnitt (92) der Haltekappe (20) einen Führungsabschnitt (104) zur Führung des Ventilkörpers (90) aufweist.

10. Hydraulikzylinder (10) nach Anspruch 9, **dadurch gekennzeichnet, daß** der Führungsabschnitt (104) der Haltekappe (20) einen zylindrischen Fortsatz (106) des Ventilkörpers (90) mit geringem Radialspiel konzentrisch umgibt.

11. Hydraulikzylinder (10) nach Anspruch 9 oder 10, **dadurch gekennzeichnet, daß** der Führungsabschnitt (104) der Haltekappe (20) eine Stirnfläche (108) aufweist, die einen Anschlag für den Ventilkörper (90) in dessen Nachsaugstellung (Fig. 3) ausbildet.

12. Hydraulikzylinder nach einem der Ansprüche 1 bis 7, **dadurch gekennzeichnet, daß** der Kolben im Zylindergehäuse einen Druckraum variabel begrenzt und eine Lauffläche für ein gehäuseseitiges Dichtelement aufweist, welches in einer Betriebsstellung des Kolbens den Druckraum abdichtet, wobei die Haltekappe (20') mit einer Nachlaufeinrichtung (138) versehen ist, die in einer Grundstellung des Kolbens den Druckraum unter dem Dichtelement hinweg mit einem Nachlaufbereich verbindet.

13. Hydraulikzylinder nach Anspruch 12, **dadurch gekennzeichnet, daß** der äußere Nabenabschnitt (94') der Haltekappe (20') eine zylindrische Außenumfangsfläche hat, an der in der Grundstellung des Kolbens das Dichtelement anliegt und die mit mehreren über den Umfang verteilten Ausgleichsnuten (140) versehen ist, welche sich in der Grundstellung des Kolbens in axialer Richtung unter dem Dichtelement hindurch erstrecken.

14. Hydraulikzylinder (10) nach einem der vorhergehenden Ansprüche, **dadurch gekennzeichnet, daß** es sich bei dem Signalelement um einen Permanentmagneten, vorzugsweise einen ferromagnetischen Ringmagneten (14) handelt.

15. Hydraulikzylinder (10) nach einem der vorhergehenden Ansprüche, **dadurch gekennzeichnet, daß** die Haltekappe (20, 20') aus Kunststoff besteht, vorzugsweise daraus spritzgegossen ist.

## Claims

1. Hydraulic cylinder (10), in particular master or slave cylinder for a hydraulic clutch control for motor vehicles, with a piston (12), which has a signal element (14) and which is movably in a longitudinal direction accepted in a cylinder housing (16), to which a position sensor (18) is secured, by means of which an axial position of the signal element (14) and therefore of the piston (12) in the cylinder housing (16) can be sensed, **characterized in that** the signal element (14) is secured to a holding cap (20, 20'), which in turn is fitted to the piston (12).

2. Hydraulic cylinder (10) according to Claim 1, **characterized in that** the holding cap (20, 20') is fitted to a pressure compartment-side face surface of the piston (12).

3. Hydraulic cylinder (10) according to Claim 1 or 2, **characterized in that** the holding cap (20, 20') is fitted to the piston (12) by means of a snap connection.

4. Hydraulic cylinder (10) according to one of the preceding claims, **characterized in that** the signal element (14) is secured to the holding cap (20, 20') by means of a snap connection.

5. Hydraulic cylinder (10) according to Claim 3 or 4, **characterized in that** the holding cap (20, 20') has an inner hub section (92, 92') and an outer hub section (94, 94') connected with it via a ring section (96, 96'), each hub section (92, 92', 94, 94') having a plurality of snap segments (98, 98', 110, 110'), by means of which the signal element (14) is secured to the holding cap (20, 20') respectively the holding cap (20, 20') is fitted to the piston (12).

6. Hydraulic cylinder (10) according to Claim 5, **characterized in that** each snap segment (98, 98', 110, 110') has at the end side a nose (100, 100', 112, 112') projecting radially inwards or outwards, which engages positively in a radial groove (116) provided on the piston (12) respectively grips behind the signal element (14).

7. Hydraulic cylinder (10) according to Claim 6, **characterized in that** the nose (112, 112') of the respective snap segment (110, 110'), which nose engaging positively in the radial grove (116) provided on the piston (12) is provided with a bevel (118, 118') on its side facing away from the piston (12).

8. Hydraulic cylinder (10) according to one of the preceding claims, **characterized in that** the piston (12) has a central feeder valve (88) with a valve body (90), the valve body (90) being held on the piston (12) by means of the holding cap (20).

9. Hydraulic cylinder (10) according to Claim 8, **characterized in that** the inner hub section (92) of the holding cap (20) has a guide section (104) for guiding the valve body (90).

10. Hydraulic cylinder (10) according to Claim 9, **characterized in that** the guide section (104) of the holding cap (20) encompasses concentrically a cylindrical extension (106) of the valve body (90) with little radial play.

11. Hydraulic cylinder (10) according to Claim 9 or 10, **characterized in that** the guide section (104) of the holding cap (20) has a face surface (108), which forms a stop for the valve body (90) in its feeder position (Fig. 3).

12. Hydraulic cylinder according to one of Claims 1 to 7, **characterized in that** the piston in the cylinder housing variably delimits a pressure compartment and has a sliding surface for a housing-side sealing element, which seals the pressure compartment when the piston is in an operating position, the holding cap (20') being provided with an after-running device (138), which, when the piston is in a normal position, connects the pressure compartment underneath the sealing element with an after-running area.

13. Hydraulic cylinder according to Claim 12, **characterized in that** the outer hub section (94') of the holding cap (20') has a cylindrical outer periphery surface which the sealing element abuts when the piston is in the normal position and which is provided with several compensating grooves (140) distributed over the periphery, which extend, when the piston is in the normal position, in an axial direction underneath the sealing element.

14. Hydraulic cylinder (10) according to one of the preceding claims, **characterized in that** the signal element is a permanent magnet, preferably a ferro-magnetic annular magnet (14).

15. Hydraulic cylinder (10) according to one of the preceding claims, **characterized in that** the holding cap (20, 20') is made of plastic, and is preferably injection-molded from this.

## Revendications

1. Cylindre hydraulique (10), en particulier cylindre émetteur ou cylindre récepteur pour un actionnement d'embrayage hydraulique pour véhicules, comportant un piston (12) qui présente un élément de signal (14) et qui est reçu à déplacement longitudinal dans un boîtier de cylindre (16), sur lequel est fixé un capteur de position (18) au moyen duquel une position axiale de l'élément de signal (14) et par conséquent du piston (12) dans le boîtier de cylindre (16) peut être détectée, **caractérisé en ce que** l'élément de signal (14) est fixé sur un capuchon de retenue (20, 20') qui est de son côté monté sur le piston (12).

2. Cylindre hydraulique (10) selon la revendication 1, **caractérisé en ce que** le capuchon de retenue (20, 20') est monté sur une face frontale du piston (12), côté chambre sous pression.

3. Cylindre hydraulique (10) selon la revendication 1 ou 2, **caractérisé en ce que** le capuchon de retenue (20, 20') est monté sur le piston (12) au moyen d'une liaison par encliquetage.

4. Cylindre hydraulique (10) selon l'une des revendications précédentes, **caractérisé en ce que** l'élément de signal (14) est fixé sur le capuchon de retenue (20, 20') au moyen d'une liaison par encliquetage.

5. Cylindre hydraulique (10) selon la revendication 3 ou 4, **caractérisé en ce que** le capuchon de retenue (20, 20') a un tronçon de moyeu intérieur (92, 92') et un tronçon de moyeu extérieur (94, 94') relié à celui-ci par un tronçon annulaire (96, 96'), chaque tronçon de moyeu (92, 92', 94, 94') présentant une multitude de segments d'encliquetage (98, 98', 110, 110') au moyen desquels l'élément de signal (14) est fixé sur le capuchon de retenue (20, 20') ou le capuchon de retenue (20, 20') est monté sur le piston (12), respectivement.

6. Cylindre hydraulique (10) selon la revendication 5, **caractérisé en ce que** chaque segment d'encliquetage (98, 98', 110, 110') présente côté extrémité un ergot (100, 100', 112, 112') faisant saillie radialement vers l'intérieur ou vers l'extérieur, qui s'engage par coopération de formes dans une gorge radiale (116) prévue sur le piston (12) ou s'engage derrière l'élément de signal (14).

7. Cylindre hydraulique (10) selon la revendication 6, **caractérisé en ce que** l'ergot (112, 112') s'engageant par coopération de formes dans la gorge radiale (116) prévue sur le piston (12), de chaque segment d'encliquetage (110, 110'), est pourvu d'une pente (118, 118') sur son côté détourné du piston (12).

8. Cylindre hydraulique (10) selon l'une des revendications précédentes, **caractérisé en ce que** le piston (12) présente une soupape de reremplissage (88) centrale avec un corps de soupape (90), le corps de soupape (90) étant retenu sur le piston (12) au moyen du capuchon de retenue (20).

9. Cylindre hydraulique (10) selon la revendication 8, **caractérisé en ce que** le tronçon de moyeu intérieur (92) du capuchon de retenue (20) présente un tronçon de guidage (104) pour guider le corps de soupape (90).

10. Cylindre hydraulique (10) selon la revendication 9, **caractérisé en ce que** le tronçon de guidage (104) du capuchon de retenue (20) entoure de manière concentrique et avec un faible jeu radial un prolongement cylindrique (106) du corps de soupape (90).

11. Cylindre hydraulique (10) selon la revendication 9 ou 10, **caractérisé en ce que** le tronçon de guidage (104) du capuchon de retenue (20) présente une face frontale (108) qui forme une butée pour le corps de soupape (90) dans sa position de reremplissage (figure 3).

12. Cylindre hydraulique (10) selon l'une des revendications 1 à 7, **caractérisé en ce que** le piston limite de manière variable une chambre de pression dans le boîtier de cylindre et présente une surface de glissement pour un élément d'étanchéité côté boîtier, qui étanche la chambre de pression dans une position de fonctionnement du piston, le capuchon de retenue (20') étant pourvu d'un dispositif de poursuite (138) qui, dans une position de base du piston, relie la chambre de pression à une zone de poursuite en passant au-dessous de l'élément d'étanchéité.

13. Cylindre hydraulique (10) selon la revendication 12, **caractérisé en ce que** le tronçon de moyeu extérieur (94') du capuchon de retenue (20') a une surface périphérique extérieure cylindrique sur laquelle est en appui l'élément d'étanchéité dans la position de base du piston et qui est pourvue de plusieurs gorges de compensation (140) réparties sur la périphérie qui, dans la position de base du piston, s'étendent en direction axiale en passant au-dessous de l'élément d'étanchéité.

14. Cylindre hydraulique (10) selon l'une des revendications précédentes, **caractérisé en ce que** l'élément de signal est un aimant permanent, de préférence un aimant annulaire (14) ferromagnétique.

15. Cylindre hydraulique (10) selon l'une des revendications précédentes, **caractérisé en ce que** le capuchon de retenue (20, 20') est en matière plastique, de préférence moulé par injection à partir de matière plastique.
